# FASCICULE DE BREVET EUROPEEN

(11) **EP 3 031 312 B1**
(45) Date de publication et mention de la délivrance du brevet: **14.04.2021**
(21) Numéro de dépôt: 15198346.7
(22) Date de dépôt: 08.12.2015
(51) Int. Cl.: A01C 7/04

(54) **BOÎTIER DE DISTRIBUTION POUR SEMOIR MONOGRAINE AVEC UNE ZONE PRESSURISÉE**
VERTEILUNGSGEHÄUSE MIT DRUCKBEAUFSCHLAGTEM BEREICH FÜR EINZELKORNSÄMASCHINE
SEED METER FOR SEED PLANTER HAVING A PRESSURIZED COMPARTMENT

(30) Priorité: 09.12.2014 FR 1462129
(43) Date de publication de la demande: 15.06.2016
(73) Titulaire: Kuhn SAS, 67700 Saverne (FR)
(72) Inventeur: EBERHART, Julien, 57370 Veckersviller (FR); AUDIGIE, Jean-Charles, 67330 Bouxwiller (FR)
(74) Mandataire: Esch, Esther Evelyne

(56) Documents cités:
- WO-A1-2010/059101
- WO-A1-2013/180619
- US-A1- 2010 300 341
- US-A1- 2014 182 495

## Description

La présente invention se rapporte au domaine technique général du machinisme agricole. L'invention concerne un boîtier de distribution pour semoir monograines comportant un disque perforé monté rotatif sur un axe de rotation pour la sélection de graines assistée par un flux d'air en dépression, le disque séparant les graines du flux d'air et présentant des perforations réparties sur au moins un cercle situé au voisinage de sa périphérie ou sur sa périphérie.

Sur certains semoirs monograine, la distribution des graines est effectuée via un disque perforé. Les graines sont retenues sur le disque perforé par aspiration sur une partie de leur trajet. La graine quitte le disque perforé au point de lâcher où l'aspiration cesse pour être amenée dans le sillon en formation via un tube de descente. Les graines sont donc distribuées une à une et placées sur la ligne de semis à écartements constants. Un éjecteur permet d'éviter que des graines restent accrochées au trou du disque perforé et entrainent ainsi des perturbations dans le placement des graines. La présence du tube de descente suppose que le lâcher de graines est effectué à une certaine hauteur au-dessus du sol. D'ordinaire, la graine est lâchée à environ 50 cm du fond du sillon. La graine est donc soumise à l'effet de la gravité durant sa chute vers le sillon. Du fait de cette hauteur de lâcher importante et de l'influence de la gravité qui est différente selon le type et le calibre des graines, la précision du semis est altérée.

Le document WO2010/059101 divulgue un boîtier de distribution pour semoir monograine comportant un disque monté rotatif pour la séparation des graines du flux d'air et qui présente des perforations réparties sur au moins un cercle voisin de sa périphérie. Ce boîtier de distribution comporte une zone pressurisée.

La présente invention a pour but de remédier aux inconvénients précités. Elle doit notamment proposer un boîtier de distribution avec les caractéristiques de la revendication 1, assurant un bon espacement et un bon alignement des graines dans le sillon.

A cet effet, une importante caractéristique de l'invention consiste en ce que le boîtier de distribution comporte une zone pressurisée à une pression supérieure à la pression atmosphérique ou supérieure à la pression à l'extérieur du boîtier de distribution. Grâce à cette caractéristique, la précision donnée par le boîtier de distribution des graines est maintenue pour pouvoir assurer un semis avec un écartement régulier entre les graines. Par ailleurs, le boîtier de distribution ou au moins une partie du boîtier de distribution constitue une barrière qui repousse la poussière. Les particules en suspension dans l'air sont maintenues à l'extérieur du boîtier de distribution.

Selon une autre importante caractéristique de l'invention, la zone pressurisée s'étend côté graines dans la portion du boîtier de distribution qui prépare et réalise l'éjection des graines. Grâce à cette caractéristique, le lâcher de la graine est plus net puisque la différence de pression au point de coupure d'air est plus élevée.

Selon une autre caractéristique, la zone pressurisée communique vers l'extérieur via la goulotte de transfert des graines vers le sol. Ainsi, la précision de distribution des graines n'est pas altérée au cours de la chute des graines.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente une vue de côté d'un élément semeur conforme à l'invention,
- la **figure 2** est une vue éclatée d'un boîtier de distribution selon l'invention,
- la **figure 3** est une vue illustrant le fonctionnement du disque perforé selon l'invention.

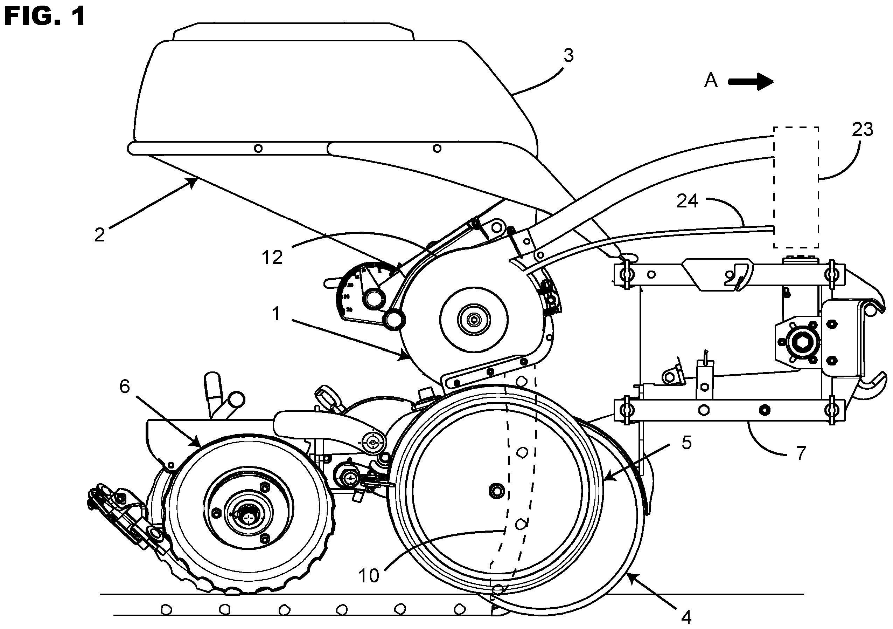

La figure 1 représente un boîtier de distribution (1) selon l'invention monté sur un élément semeur (2). Le boîtier de distribution (1) a pour rôle d'extraire une à une les graines d'une trémie (3) et de les répartir à intervalle constant sur la ligne de semis. De tels boîtiers se retrouvent généralement sur des semoirs monograines qui travaillent sur plusieurs rangées. Les éléments semeurs (2) sont répartis sur le châssis sensiblement horizontalement et perpendiculairement à la direction d'avance au travail (A). Dans la suite de la description, les notions "avant" et "arrière" sont définies par rapport au sens d'avance (A). D'après la figure 1, l'élément semeur (2) possède une trémie (3), un dispositif d'enterrage (4), un dispositif de contrôle de profondeur (5) et un dispositif de fermeture (6). Chaque élément semeur (2) est monté respectivement sur le châssis au moyen d'un parallélogramme déformable (7), lequel permet à l'élément semeur (2) de rester parallèle au sol en toutes positions. La trémie (3) constitue la réserve de graines destinée à alimenter le boîtier de distribution (1). En sortie du boîtier de distribution, les graines sont transportées vers le dispositif d'enterrage (4) pour être mise en terre. Le dispositif d'enterrage (4) crée un sillon à une profondeur déterminée pour y placer la graine. La profondeur de semis est donnée par le dispositif de contrôle de profondeur (5). Il est disposé latéralement par rapport au point de chute des graines pour permettre au dispositif d'enterrage (4) de suivre les dénivellations du sol sans décalage. Le dispositif de fermeture (6) assure la fermeture du sillon. Il s'étend derrière le dispositif de contrôle de profondeur (5), compte tenu de la direction d'avance (A).

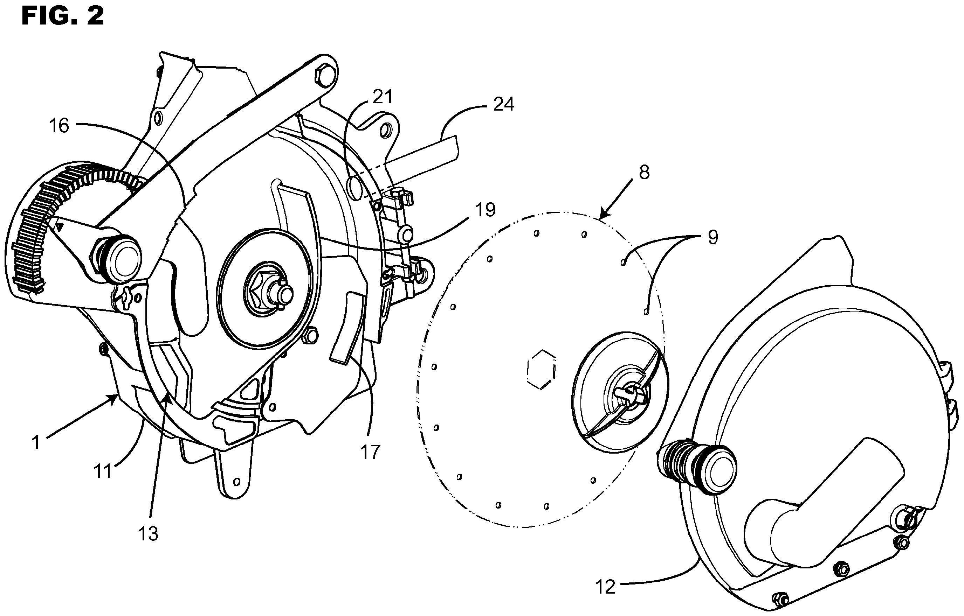

La figure 2 représente le boîtier de distribution (1) sous forme éclatée. Il assure l'extraction des graines au moyen d'un disque (8). Le disque (8) présente des perforations (9) réparties sur au moins un cercle situé au voisinage de sa périphérie. Dans l'exemple, les perforations (9) sont disposées à intervalles réguliers sur une circonférence voisine du pourtour du disque (8). Les perforations (9) sont avantageusement des ouvertures sous forme de trous ménagées dans le disque (8). Les perforations (9) sont des trous à diamètre circulaire ou des rainures ouvertes. Les perforations (9) présentent le même diamètre qui est adapté à la taille, à la forme et au poids de la graine qui va être semée. Les graines sortent de manière régulière du boîtier de distribution (1) par un tube de descente (10) qui amène les graines dans le sillon. Le boîtier de distribution (1) comporte un carter (11) de forme générale cylindrique et un couvercle (12). Le disque (8) est monté rotatif dans le carter (11). Dans une alternative, les perforations sont disposées sur la périphérie du disque (8).

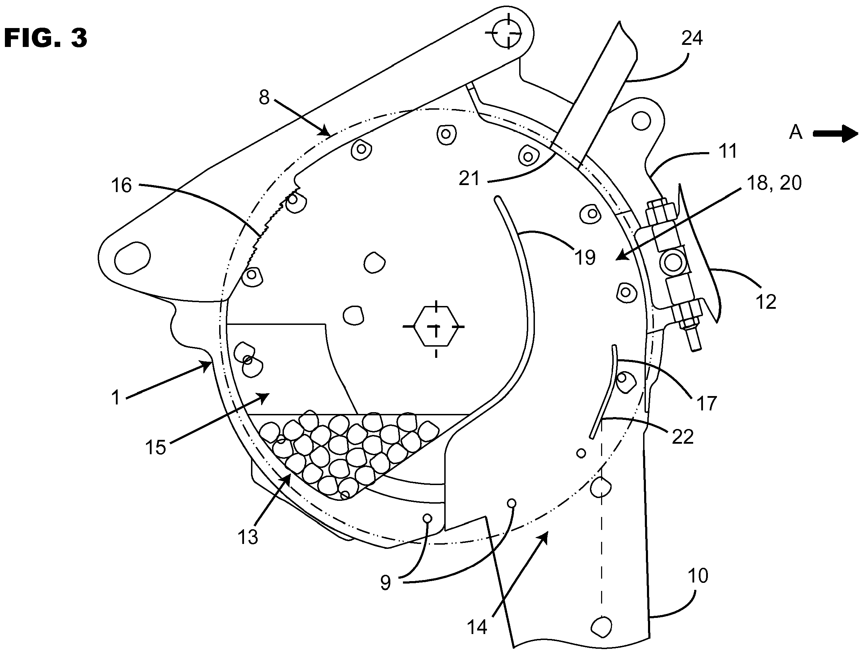

La figure 3 illustre le fonctionnement du boîtier de distribution (1). Des graines ont été représentées afin de mieux comprendre le fonctionnement. Le disque (8) est représenté en traits discontinus, il sépare les graines du flux d'air. Le fond de boîtier (13) garni de graines s'étend dans le quart avant et inférieur du carter (11) compte tenu de la direction d'avance (A). Le fond de boîtier (13) est alimenté en graines par la trémie (3) par l'entrée (15). Le disque (8) tourne dans le sens horaire. Le disque (8) plonge dans le fond de boîtier (13) et tourne en emportant sur les perforations (9) des graines. Les graines sont prélevées dans le fond de boîtier (13) et sont retenues par dépression au travers des perforations (9) pendant une partie de leur déplacement angulaire. Dans le quart arrière et supérieur du carter (11) est positionné un sélecteur (16) dont la fonction est d'éliminer les graines doubles retenues sur les perforations (9). Un tel sélecteur (16) est placé tangentiellement par rapport aux perforations (9). Le boîtier (1) n'est pas pressurisé dans la zone d'entrée et de sélection des graines, à l'arrière de la paroi (19), c'est-à-dire qu'il est laissé à pression atmosphérique dans cette partie. Le boîtier (1) comporte par exemple une trappe de surveillance non représentée qui peut être contiguë au sélecteur (16) et qui obture le boîtier (1) dans sa partie haute, ici au-dessus du fond (13). Les graines sont lâchées au niveau de l'ouverture de décharge (14) puisque les perforations (9) sont soumises à la dépression jusqu'au voisinage de l'ouverture de décharge (14). Dans le quart avant et inférieur s'étend un éjecteur (17) facilitant le décrochement de la graine et son lâcher dans le tube de descente (10). L'éjecteur (17) est constitué d'une rampe qui a pour fonction d'aider au décrochement des graines. La graine, au cours de sa trajectoire, est poussée à se décrocher de la perforation (9) par cette rampe. Lors de la rotation du disque (8), les graines arrivant au niveau de l'ouverture de décharge (14) sont, dans un premier temps légèrement poussées vers l'extérieur par l'éjecteur (17), puis vient la zone de coupure du flux d'air. La graine est ensuite forcée à se décrocher puisque les perforations (9) passent dans la trajectoire de l'éjecteur (17). Une paroi (19) de récupération sépare le fond de boîtier (13) alimenté en graines par l'entrée (15) depuis la trémie (3), de la demi-partie avant du boîtier (1) comportant l'ouverture de décharge (14). La paroi (19) s'étend depuis le fond de boîtier (13) jusqu'au-dessus de l'axe de rotation du disque (8), voire sur plus de trois-quarts de la hauteur du boîtier (1) ou du disque (8) comme c'est le cas ici.

Le disque (8) est entraîné en rotation via des éléments d'entraînement (non représentés) en fonction de la vitesse d'avance du semoir. Ainsi, la vitesse de distribution est adaptée à la vitesse d'avancement du semoir ce qui permet de semer les graines à des écartements constants. Le flux d'air pour la sélection des graines est produit par une turbine entraînée par la prise de force du tracteur, par un moteur hydraulique ou par un moteur électrique.

Selon une importante caractéristique de l'invention, le boîtier de distribution (1) comporte une zone pressurisée (18) à une pression supérieure à la pression atmosphérique ou supérieure à la pression à l'extérieur du boîtier de distribution (1). De cette manière, la précision de distribution des graines obtenue grâce au boîtier de distribution (1) est conservée voire améliorée. Par ailleurs, grâce à la zone pressurisée (18) à une pression supérieure, les particules en suspension dans l'air telles que les poussières restent à l'extérieur du boîtier de distribution (1). Un tel boîtier de distribution pressurisé repousse donc les poussières, elles ne rentrent pas dans le boîtier de distribution (1).

D'une manière avantageuse, la zone pressurisée (18) s'étend côté graines dans la portion (20) du boîtier qui prépare et réalise l'éjection des graines, à l'opposé de l'entrée (15) des graines par rapport à la paroi (19), et à l'avant de la paroi (19). La zone pressurisée (18) est délimitée à l'arrière par une paroi (19) qui la sépare du fond de boîtier (13) alimenté en graines depuis une trémie (3). De cette manière, le lâcher de graine est plus net puisque la différence de pression au point de coupure d'air est plus élevée. La zone pressurisée (18) s'étend sensiblement dans la demi-partie avant du boîtier de distribution (1). La zone de sélection des graines située dans la demi-partie arrière du boîtier de distribution (1), à l'arrière de la paroi (19) n'est pas ou n'est pratiquement pas influencée par la zone pressurisée (18). D'après la figure 3, la zone pressurisée (18) est délimitée par la paroi (19), laquelle permet de récupérer et de diriger les graines doubles éliminées par le sélecteur (16) vers le fond de boîtier (13). La zone pressurisée (18) couvre moins de la moitié du volume du boîtier de distribution (1) côté graines. De préférence, la pression de la zone pressurisée (18) est sensiblement supérieure à la pression atmosphérique. La pression de la zone pressurisée (18) est quelque peu supérieure à la pression atmosphérique.

D'une manière particulièrement avantageuse, la zone pressurisée (18) communique vers l'extérieur via le tube de descente (10) qui dirige les graines vers le sol. La section plus importante au niveau de l'ouverture de décharge (14) et du tube de descente (10) favorise la fuite d'air vers l'extérieur. Cette fuite d'air permet également d'accompagner positivement la chute de la graine dans le sillon. En effet, elle atténue les effets néfastes liés à l'apesanteur qui donnent des vitesses et accélérations différentes selon la taille et le calibre des graines. Grâce à la fuite d'air dans le tube de descente (10), la précision de distribution des graines n'est pas altérée au cours de la chute des graines.

Dans l'exemple de réalisation représenté sur la figure 1, le boîtier de distribution (1) est disposé sensiblement au-dessus du dispositif d'enterrage (4). Le boîtier de distribution (1) est donc placé à une certaine hauteur par rapport au sol. Les graines sont donc acheminées dans le sol via le tube de descente (10). Le dispositif de contrôle de profondeur (5) notamment les roues de jauge sont placées latéralement par rapport au dispositif d'enterrage. Dans une alternative non représentée, le dispositif de contrôle de profondeur est placé devant ou derrière le dispositif d'enterrage. Avec une telle disposition, le boîtier de distribution (1) est plus proche du sol puisque le dispositif d'enterrage est un soc. La hauteur de chute de graines est donc plus faible. Les graines sont acheminées via un tube de descente plus court ou même sans tube de descente. Comme la hauteur de chute des graines est moins importante, l'altération de la précision est donc peu présente avec une telle disposition du boîtier de distribution puisque l'influence de la gravité est moindre. Néanmoins, le cadencement de sortie des graines et donc la régularité de l'écartement est améliorée grâce à la présence de la zone pressurisée dans le boîtier de distribution.

Le boîtier de distribution (1) comporte au moins une ouverture (21) au niveau de la portion du boîtier (20) qui prépare et réalise l'éjection. De préférence, le boîtier de distribution (1) comporte une seule ouverture (21), par exemple à la verticale ou au-dessus de l'ouverture de décharge (14). L'ouverture (21) permet l'application de l'air sous pression dans la zone pressurisée (18), elle s'étend en amont du point d'éjection (22). Le diamètre de l'ouverture (21) est suffisamment petit pour réduire l'énergie à apporter. La section ainsi que la pression sont les plus basses possible pour garantir un bon fonctionnement avec un minimum d'énergie à consommer. Lorsque le boîtier de distribution (1) dispose de plusieurs ouvertures (21), au moins l'une des ouvertures (21) s'étend en amont du point d'éjection (22).

Un dispositif de soufflerie (23) fournit l'air sous pression à la zone pressurisée (18) via au moins un tuyau (24). Le dispositif de soufflerie (23) est intégré, proche ou déporté par rapport au boîtier de distribution (1). Dans l'exemple de réalisation de la figure 1, le dispositif de soufflerie (23) est représenté sous forme schématique. Il est déporté par rapport au boîtier de distribution (1), il est monté sur le châssis du semoir. Ce dispositif de soufflerie (23) est celui qui fournit également le flux d'air en dépression pour la sélection des graines. Le semoir dispose donc d'un circuit pneumatique de distribution d'air en dépression ainsi qu'un autre circuit pour la distribution d'air en pression.

Dans une alternative, le dispositif de soufflerie (23), pour alimenter la zone pressurisée (18), est indépendant de celui qui alimente le boîtier de distribution (1) en dépression. Chaque boîtier de distribution (1) comporte un dispositif de soufflerie (23) indépendant, lequel est monté de façon intégré ou proche du boîtier de distribution (1).

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Boîtier de distribution (1) pour semoir monograine comportant un disque (8) monté rotatif sur un axe de rotation pour la sélection de graines assistée par un flux d'air en dépression, le disque (8) séparant les graines du flux d'air et présentant des perforations (9) réparties sur au moins un cercle situé au voisinage de sa périphérie ou sur sa périphérie, le boîtier de distribution (1) comportant une zone pressurisée (18) à une pression supérieure à la pression atmosphérique ou supérieure à la pression à l'extérieur du boîtier de distribution (1), ***caractérisé en ce que*** la zone pressurisée (18) couvre moins de la moitié du volume du boîtier de distribution (1) côté graines.

2. Boîtier selon la revendication 1, ***caractérisé en ce que*** la zone pressurisée (18) s'étend côté graines dans la portion (20) du boîtier qui prépare et réalise l'éjection des graines.

3. Boîtier selon la revendication 1 ou 2, ***caractérisé en ce que*** la zone pressurisée (18) communique vers l'extérieur via le tube de descente (10) des graines vers le sol.

4. Boîtier selon l'une des revendications précédentes, ***caractérisé en ce que*** la zone pressurisée (18) s'étend sensiblement dans la demi-partie avant du boîtier (1).

5. Boîtier selon l'une des revendications précédentes, ***caractérisé en ce que*** la zone pressurisée (18) est délimitée à l'arrière par une paroi (19) qui la sépare du fond de boîtier (13) alimenté en graines depuis une trémie (3).

6. Boîtier selon l'une quelconque des revendications précédentes, ***caractérisé en ce que*** la pression de la zone pressurisée (18) est sensiblement supérieure à la pression atmosphérique.

7. Boîtier selon la revendication 2, ***caractérisé en ce que*** au moins une ouverture (21) est prévue dans le boîtier de distribution (1) au niveau de la portion (20) du boîtier qui prépare et réalise l'éjection des graines.

8. Boîtier selon la revendication 7, ***caractérisé en ce que*** l'une au moins des ouvertures (21) s'étend en amont d'un point d'éjection (22).

9. Boîtier selon la revendication 7 ou 8, ***caractérisée en ce que*** l'au moins une ouverture (21) est disposée sensiblement à la verticale ou au-dessus de l'ouverture de décharge (14).

10. Boîtier selon l'une quelconque des revendications précédentes, ***caractérisé en ce que*** un dispositif de soufflerie (23) fournit l'air sous pression à la zone pressurisée (18), le dispositif de soufflerie (23) est intégré, proche ou déporté par rapport au boîtier de distribution (1).

11. Boîtier selon la revendication précédente, ***caractérisé en ce que*** le dispositif de soufflerie (23) est le dispositif de soufflerie réalisant le flux d'air en dépression pour la sélection des graines.

12. Semoir monograine pneumatique présentant au moins un élément semeur (2) équipé d'un boîtier de distribution (1) selon l'une quelconque des revendications précédentes.

## Patentansprüche

1. Verteiler (1) für eine Einzelkornsämaschine, mit einer Scheibe (8), die auf einer Drehachse zur Saatvereinzelung, die von einem drucklosen Luftstrom unterstützt wird, drehbar angebracht ist, wobei die Scheibe (8) die Saatkörner von dem Luftstrom trennt und Bohrungen (9) aufweist, die auf mindestens einem Kreis verteilt sind, der sich in der Nähe ihres Umfangs oder auf ihrem Umfang befindet, wobei der Verteiler (1) einen Druckbereich (18) mit einem Druck umfasst, der höher ist als der atmosphärische Druck oder höher als der Druck außerhalb des Verteilers (1), ***dadurch gekennzeichnet, dass*** der Druckbereich (18) weniger als die Hälfte des Volumens des Verteilers (1) auf Seite des Saatguts abdeckt.

2. Verteiler nach Anspruch 1, ***dadurch gekennzeichnet, dass*** sich der Druckbereich (18) auf Seite der Saatkörner in den Abschnitt (20) des Verteilers erstreckt, der den Ausstoß der Saatkörner vorbereitet und ausführt.

3. Verteiler nach Anspruch 1 oder 2, ***dadurch gekennzeichnet, dass*** der Druckbereich (18) mit dem Außenbereich über das Fallrohr (10) der Saatkörner in Richtung des Bodens verbunden ist.

4. Verteiler nach irgendeinem der vorhergehenden Ansprüche, ***dadurch gekennzeichnet, dass*** sich der Druckbereich (18) im Wesentlichen in der vorderen Hälfte des Verteilers (1) erstreckt.

5. Verteiler nach irgendeinem der vorhergehenden Ansprüche, ***dadurch gekennzeichnet, dass*** der Druckbereich (18) hinten von einer Wand (19) begrenzt ist, die ihn vom Boden (13) des Verteilers trennt, der aus einem Trichter (3) mit Saatgut versorgt wird.

6. Verteiler nach irgendeinem der vorhergehenden Ansprüche, ***dadurch gekennzeichnet, dass*** der Druck des Druckbereichs (18) im Wesentlichen höher ist als der atmosphärische Druck.

7. Verteiler nach Anspruch 2, ***dadurch gekennzeichnet, dass*** mindestens eine Öffnung (21) in dem Verteiler (1) auf Höhe des Verteilerabschnitts (20) vorgesehen ist, der den Ausstoß der Saatkörner vorbereitet und ausführt.

8. Verteiler nach Anspruch 7, ***dadurch gekennzeichnet, dass*** sich mindestens eine der Öffnungen (21) stromaufwärts von einem Ausstoßpunkt (22) erstreckt.

9. Verteiler nach Anspruch 7 oder 8, ***dadurch gekennzeichnet, dass*** mindestens eine Öffnung (21) im Wesentlichen in der Vertikalen oder über der Saatablageöffnung (14) angeordnet ist.

10. Verteiler nach irgendeinem der vorhergehenden Ansprüche, ***dadurch gekennzeichnet, dass*** ein Gebläse (23) dem Druckbereich (18) die Druckluft bereitstellt, das Gebläse (23) ist integriert, in der Nähe oder in Bezug auf den Verteiler (1) versetzt.

11. Verteiler nach dem vorhergehenden Anspruch, ***dadurch gekennzeichnet, dass*** das Gebläse (23) das Gebläse ist, das den drucklosen Luftstrom für die Saatvereinzelung ausführt.

12. Pneumatische Einzelkornsämaschine, die mindestens ein Säelement (2) aufweist, das mit einem Verteiler (1) nach irgendeinem der vorhergehenden Ansprüche ausgestattet ist.

## Claims

1. Distributor (1) for precision seeder comprising a disc (8) rotatably mounted on a rotation axis for seed selection assisted by a depressurized airflow, the disc (8) separating the seeds from the airflow and having drilling holes (9) distributed over at least one circle located close to its periphery or on its periphery, the distributor (1) comprising a pressurized zone (18) at a pressure higher than the atmospheric pressure or higher than the pressure outside the distributor (1), ***characterized in that*** the pressurized zone (18) covers less than half the volume of the distributor (1) on the seed side.

2. Distributor according to claim 1, ***characterized in that*** the pressurized zone (18) extends on the seed side into the portion (20) of the distributor that prepares and performs the ejection of the seeds.

3. Distributor according to claim 1 or 2, ***characterized in that*** the pressurized zone (18) is in contact with the outside via the drop tube (10) which directs the seeds towards the ground.

4. Distributor according to one of the preceding claims, ***characterized in that*** the pressurized zone (18) extends substantially into the front half portion of the distributor (1).

5. Distributor according to one of the preceding claims, ***characterized in that*** the pressurized zone (18) is delimited at the rear by a wall (19) that separates it from the bottom (13) of the distributor, supplied with seeds from a hopper (3).

6. Distributor according to any one of the preceding claims, ***characterized in that*** the pressure of the pressurized zone (18) is substantially higher than the atmospheric pressure.

7. Distributor according to claim 2, ***characterized in that*** at least one opening (21) is provided in the distributor (1) at the location of the portion (20) of the distributor that prepares and performs the ejection of the seeds.

8. Distributor according to claim 7, ***characterized in that*** at least one of the openings (21) extends upstream of an ejection point (22).

9. Distributor according to claim 7 or 8, ***characterized in that*** at least one opening (21) is positioned substantially vertically from or above the discharge opening (14).

10. Distributor according to any one of the preceding claims, ***characterized in that*** a blowing device (23) supplies pressurized air to the pressurized zone (18), the blowing device (23) being built in, close to, or offset relative to the distributor (1).

11. Distributor according to the preceding claim, ***characterized in that*** the blowing device (23) is the blowing device that makes the depressurized airflow for the seed selection.

12. Pneumatic precision seeder with at least one seeder element (2) fitted with a distributor (1) according to any one of the preceding claims.
